# EUROPEAN PATENT SPECIFICATION

(11) **EP 2 765 486 B1**
(45) Date of publication and mention of the grant of the patent: **14.10.2015**
(21) Application number: 13154431.4
(22) Date of filing: 07.02.2013
(51) Int. Cl.: G06F 3/023, G06F 3/0488

(54) **Method and apparatus for using persistent directional gestures for localization input**
Verfahren und Vorrichtung zur Verwendung von dauerhaften Richtungsgesten zur Lokalisierungseingabe
Procédé et appareil permettant d'utiliser des gestes directionnels persistants pour l'entrée de localisation

(43) Date of publication of application: 13.08.2014
(73) Proprietor: BlackBerry Limited, Waterloo, ON N2K 0A7 (CA)
(72) Inventor: Lewin, Mathias, Malmö 211 40 (SE)
(74) Representative: Moore, Barry

(56) References cited:
- US-A1- 2012 113 008

## Description

### FIELD

This application generally relates to input methodologies for electronic devices, such as handheld electronic devices, and more particularly, to methods for inputting characters from various languages.

### BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message. This input can be complicated further if variants of characters from different language alphabets must be entered.

Accordingly, methods and apparatuses are provided to assist users in entering different language variants of characters.

In US2012/113008 a computer-implemented method is described for displaying an on-screen keyboard on a touch-sensitive display of an electronic device. The method may detect contact of a finger in a contact area of the display and monitor movement of the contact area on display in response to movement of the finger across the display. The method may determine that the contact area is proximate a region of the display that includes a key of the on-screen keyboard, and provide a haptic effect to indicate that the finger is proximate the at least one key. The haptic effect may be provided via the display and be provided proximate to the detected contact area. In an example embodiment, an anchor on one or more keys of the on-screen keyboard provides a further haptic effect to the finger when the finger is proximate to the anchor.

### Summary

Accordingly the present teaching provides a method and device according to the independent claims. Advantageous features are defined in the dependent claims.

### BRIEF DESCRIPTION OF THE DRAWINGS

**Fig. 1** is an example block diagram of an electronic device, consistent with embodiments disclosed herein.
**Figs. 2A-2G** and **3A-3G** show examples of an electronic device, consistent with embodiments disclosed herein.
**Figs. 4-5** are flow charts showing example device configuration and device operation processes, consistent with embodiments disclosed herein.

### DETAILED DESCRIPTION

Reference will now be made in detail to the disclosed example embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touchscreen) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device. The electronic device includes a keyboard for purposes of character entry and operation in various contexts.

Basic solutions exist for the input of non-keyboard-assigned characters, such as international and language variant characters including diacritics, accented characters, and currency symbols. However, on a reduced size keyboard common in electronic devices, input of these characters is cumbersome and slows down the overall input method. Users generally must look carefully at selection candidates and make a high precision selection of that character only, with no spatial navigational paradigm applied to the candidate list.

Accordingly, example embodiments described herein permit a user of an electronic device to input language variant characters more quickly and accurately. Example embodiments described herein assist with character selection by increasing the size of the selection area of the touchscreen, and thus, the accuracy of a given selection. Furthermore, by applying a directional paradigm to the selection process, speed and ease of use are enhanced.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). For example, the term "the generated set of characters" as used in "displaying the generated set of characters" includes displaying one or more generated set of characters. Directional references to graphical user interface (GUI) elements, such as top and bottom, are intended to be relative to a current screen orientation (which may change) rather than any physical orientation of the host device.

In one embodiment, a method is disclosed for inputting characters in a mobile communication device having a display, a keyboard, and a memory. The method includes receiving an input character, and displaying available language variant characters associated with the input character at a position in a menu determined from a persistent association between a plurality of available language character sets and positions on the menu. Additionally, the method includes outputting, in response to an input reflecting a directional swipe toward the position of a particular one of the language variant characters on the menu, the particular language variant character as a selected character.

In another embodiment, a mobile communication device having a display and a keyboard is disclosed, comprising a memory containing a plurality of character sets associated with languages, each language character set having an associated set of language variant characters, and a set of instructions. The mobile communication device further comprises a set of instructions, and one or more processors configured to execute the instructions. The one or more processors are configured to execute the instructions to receive an input character, and display available language variant characters associated with the input character at a position in a menu determined from a persistent association between a plurality of available language character sets and positions on the menu. Additionally, the one or more processors of the mobile communication device are configured to execute the instructions to output, in response to an input reflecting a directional swipe toward the position of a particular one of the language variant characters on the menu, the particular language variant character as a selected character.

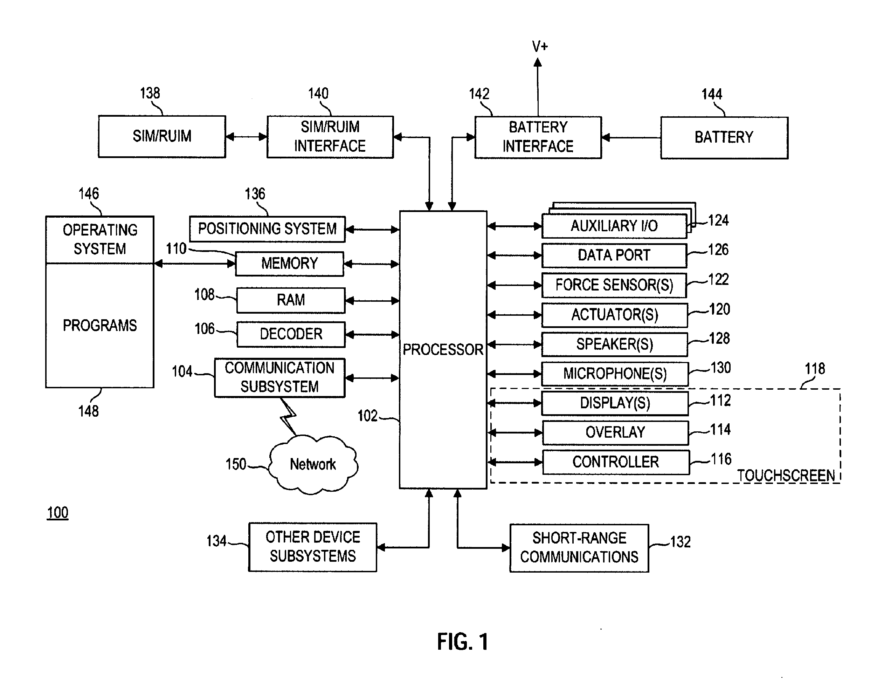

**Fig. 1** is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touchscreen 118.

Touchscreen 118 includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters may be inputted when the user touches the touchscreen at a location associated with said character.

Touchscreen 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touchscreen are described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

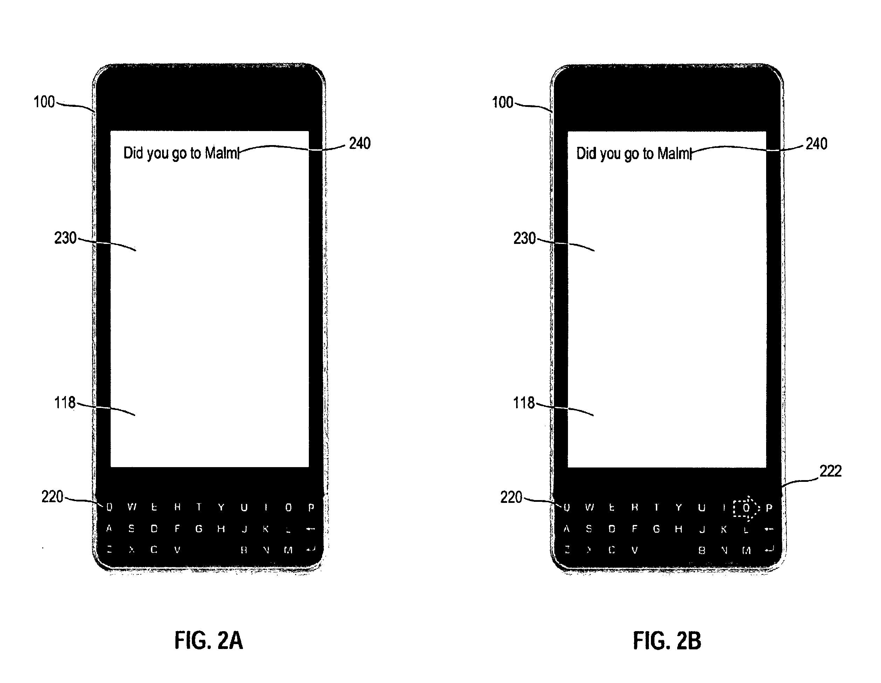

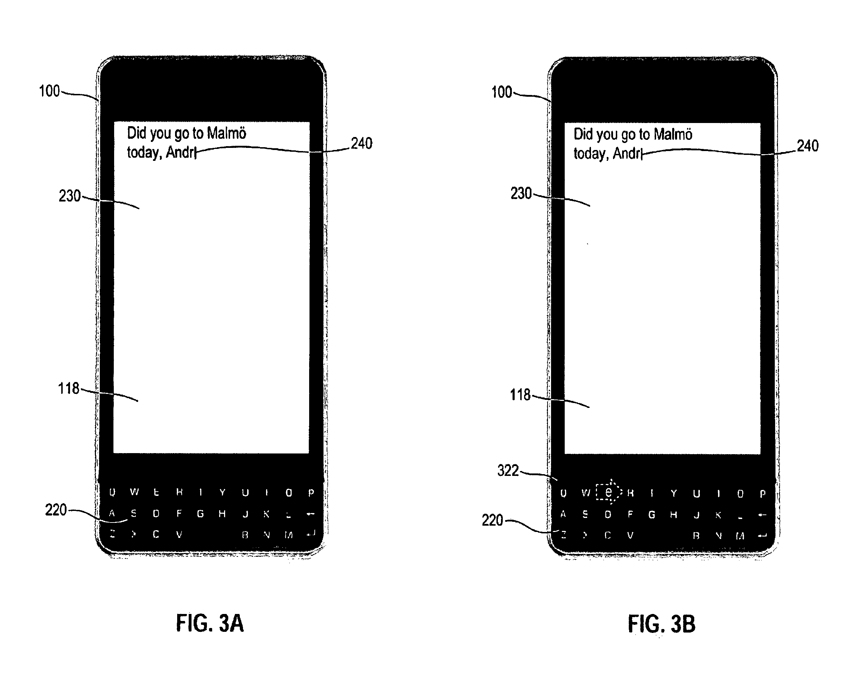

**Figures 2A-2G** **and** **3A-3G** illustrate a series of examples of electronic device 100, consistent with example embodiments disclosed herein. Reference is first made to **Fig. 2A****,** which illustrates a touchscreen 118 displaying a keyboard 220. In the presently described embodiment, the keyboard 220 is a virtual keyboard rendered as a GUI displayed on touchscreen 118. In other example embodiments, keyboard 220 is a virtual keyboard that can be displayed at various places on touchscreen 118. Accordingly, keyboard 220 is movable within the touchscreen 118. Keyboard 220 may alternatively be a physical keyboard, comprising a series of plastic or metal key covers overlaid on top of physical or electronic dome switches. In yet another example embodiment, keyboard 220 may be a capacitive physical keyboard comprising capacitive sensors, such as force sensors 122, arranged within or underneath the keys for purposes of force and gesture recognition.

The touchscreen 118 may be configured to detect the location as well as the pressure of one or more objects at the same time. The touchscreen 118 includes two input areas: (1) the keyboard 220, which includes a plurality of keys, each key corresponding to one or more different characters of a plurality of characters; and (2) a viewing pane 230 which displays a predetermined amount of text from a document under composition. In the example, the keyboard 220 is located below the viewing pane 230. Other locations for the input areas 220 and 230 are possible. For example, the keyboard 220 could be located at the top of the touchscreen 118, and the viewing pane 230 could be located below the keyboard 220. In yet other examples, the viewing pane 230 could be omitted.

The amount of text in viewing pane 230 from the document under composition may be limited to a predetermined number of lines of text, for example, 10 lines. The document under composition may be any type of document for any application which supports the keyboard 220, such as an email or other messaging application.

As shown in **Fig. 2A****,** keyboard 220 is a standard QWERTY keyboard layout; however, any conventional keyboard layout can be displayed for use in the device, such as AZERTY, QWERTZ, or a layout based on the International Telecommunication Union (ITU) standard (ITU E.161) having "ABC" on key 2, "DEF" on key 3, and so on. Keyboard 220 includes various keys that can provide different inputs, such as punctuation, letters, numbers, enter or return keys, and function keys. While keyboard 220 is shown as having a square shape, it can have any other shape (such as an oval).

As shown in **Fig. 2A****,** the touchscreen 118 displays the cursor 240, which displays characters in response to input in the keyboard 220. In the example embodiment illustrated in **Fig. 2A****,** the user is inputting text via keyboard 220, and reaches a point where a language variant character is desired. In the example, the user wishes to input the Swedish city of "Malmö", which contains an accented language variant character, the character ö in the Swedish language.

**Fig. 2B** illustrates the user initiating a language variant character entry module. The language variant character entry module may comprise one or more of the programs 148 loaded into operating system 146 via memory 110. In the example shown, the user achieves initiation of the language variant character entry module by a directional gesture 222 on the "base" character, in this case the letter "o" on keyboard 220, to access accented character "ö." The user may initiate the language variant character entry module in any number of ways, such as a tap on the "base" key, a press-and-hold, a double tap, etc. In some embodiments, the module may be accessed through a menu overlay. In some embodiments, the module may be accessed through alternative means, such as voice direction. In some embodiments, the module may be accessed via positioning system 136, such as through a shake, tilt, or likewise motion of electronic device 100.

Alternatively, keyboard 220 may be a physical keyboard configured in a manner to permit gesture input to assist with the character input process and the initiation of the language variant character entry module, for example, a capacitive touch keyboard. This may include an array of force sensors 122 located underneath keyboard 220 and associated with the plurality of keys of keyboard 220 that can detect gesture input.

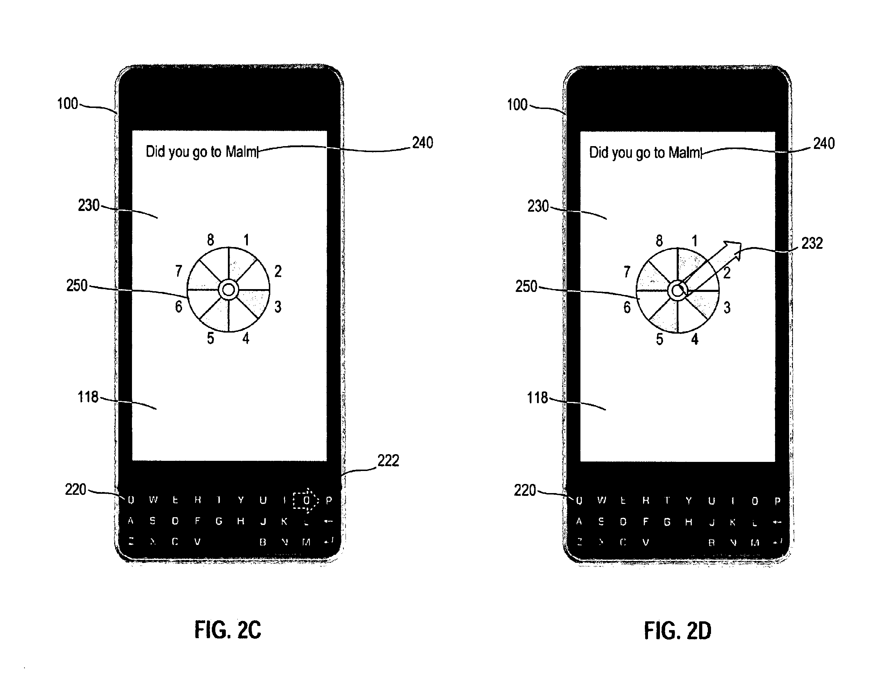

Referring to **Fig. 2C****,** the user has initiated the language variant character entry module. Menu 250 appears on touchscreen 118 allowing further selection by the user. In the example embodiment of **Fig. 2C****,** menu 250 is a circular or pie shaped menu overlay, however, in other embodiments, menu 250 may take on a variety of shapes, sizes, and locations within touchscreen 118. For example, menu 250 may be rectangular, hexagonal, octagonal, quadrilateral, or triangular. The various segments of menu 250 depict languages. The available language character sets may be visually presented to the user in a variety of ways. In some embodiments, the available language character sets may be represented to the user as numerical selections, which the user will associate with pre-defined language character set selections. In some embodiments, the available language character sets may be represented to the user as their full names, for example, "Swedish," "Spanish," "German," etc. In some embodiments, the available language character sets may be represented to the user as abbreviations. The abbreviations may represent the language itself, or may, for example, represent a country or geographical region associated with the language. For example, "Swedish" might be abbreviated "SWE." In some embodiments, the abbreviation may represent a country or geographical region associated with the language. For example, a selection option for Portuguese in some embodiments could alternatively be represented as "POR" for Portugal/Portuguese, or as "BRA" for Brazil.

In other embodiments, the available language character sets may be represented to the user by graphical means through the graphical user interface, such as a national flag associated with a country associated with the language. This embodiment would also permit variations of language character sets for different dialects or versions of a different language. For example, an American flag and a British flag might be displayed to both represent different character sets associated with the English language. In another embodiment, for example, flags for Mexico and Spain could be presented to both represent different character sets associated with the Spanish language.

The language character sets associated with the particular positions of menu 250 are permanently assigned to those positions through a configuration process. The language character sets will always be displayed in the same place, thus allowing users to develop speed and consistency in character entry over time. Additionally, electronic device 100 may detect the current language character set after the first input of language variant characters from that character set, and subsequently default to presentation of that language character set for future character entry. Detection of the current language character set can be based on selection of one of more language variant characters in that language character set as described herein.

In **Figs. 2C-2D**, the user desires to input a Swedish language variant character. **Figs. 2C-2D** depict the Swedish language as being associated with position "2" on menu 250. To select the desired language, the user performs a directional swipe gesture 232, as shown in **Fig. 2D**, where the user swipes towards menu option 2 to select the desired language, Swedish. In some embodiments, the user may select the language with different gestures, for example, a tap on the desired segment of menu 250 as displayed on touchscreen 118. In some embodiments, the user may select the language with a press-and-drag gesture. In some embodiments, the user may press the desired segment of menu 250 as displayed on touchscreen 118.

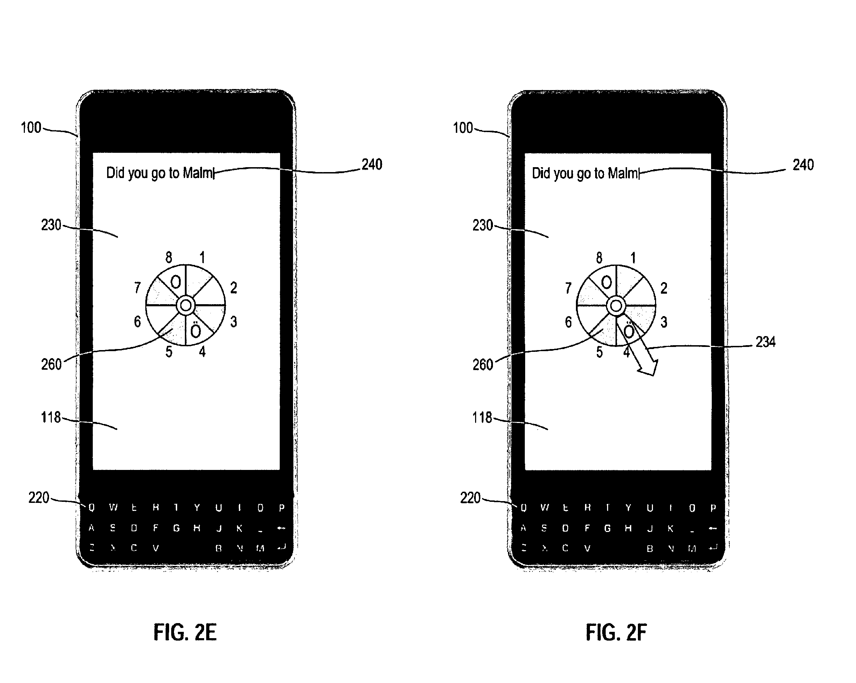

In **Fig. 2E****,** menu 260 is displayed on touchscreen 118 presenting the language variant selection candidates associated with the chosen language. In the embodiment shown in **Fig. 2E****,** the user has previously selected the Swedish language on menu 250, and thus menu 260 presents different language variant selection candidates for the character "o" that are associated with the Swedish language.

Much as with menu 250 and various pre-assigned language character sets, language variant characters that are selection candidates are permanently assigned to particular positions on menu 260. Consistency in character presentation again permits the user to develop speed and accuracy in character entry. In the example embodiment shown in **Figs. 2E-2F****,** for instance, the character "o" is assigned to position 8, and the language variant character "ö" is assigned to position 4. As before, any and all characters can be permanently assigned to any and all positions associated with menu 260.

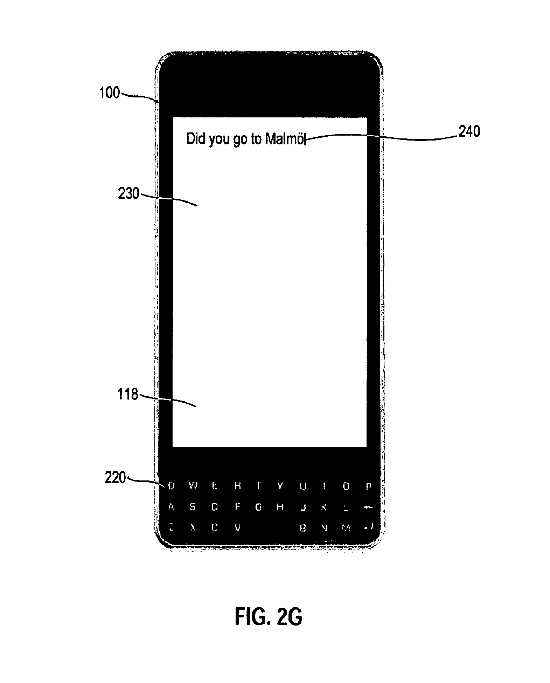

Since the user desires to input the language variant character "ö" to complete the Swedish city "Malmö," the user makes a directional swipe gesture 234 towards position 4 of menu 260 in **Fig. 2F****.** Electronic device 100 is configured, through a process described later, to recognize that the user thus desires to input the language variant character "ö" into the text being entered into viewing pane 230 of touchscreen 118. In **Fig. 2G****,** the character is displayed on the screen in the word, adjacent to cursor 240. Menus 250 and 260 disappear from the display, and normal text entry may resume.

The user may re-enter the language variant character entry module at any time during text entry. **Figs. 3A-3G** illustrate another example embodiment of the disclosure similar to that shown in **Figs. 2A-2G****.**

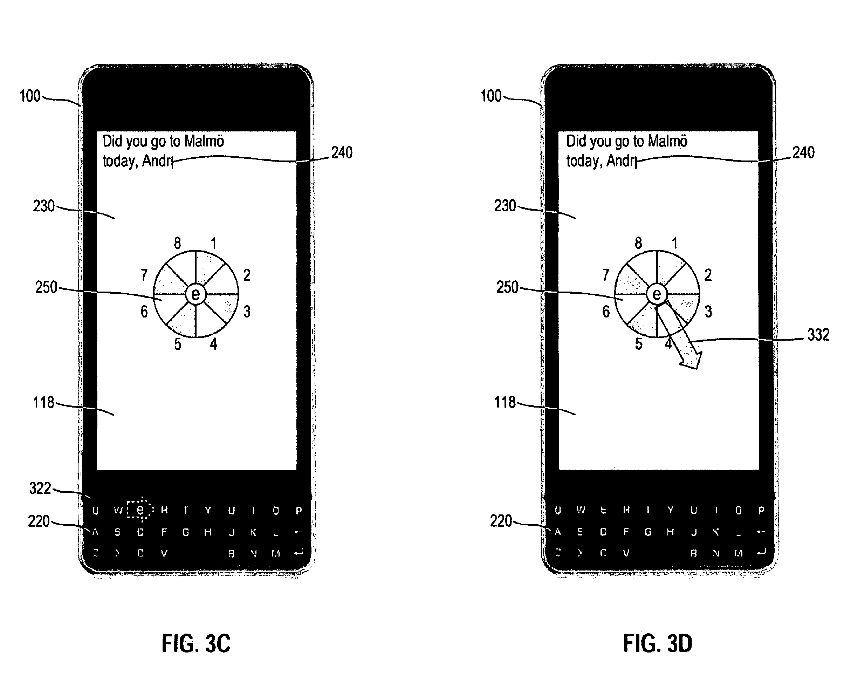

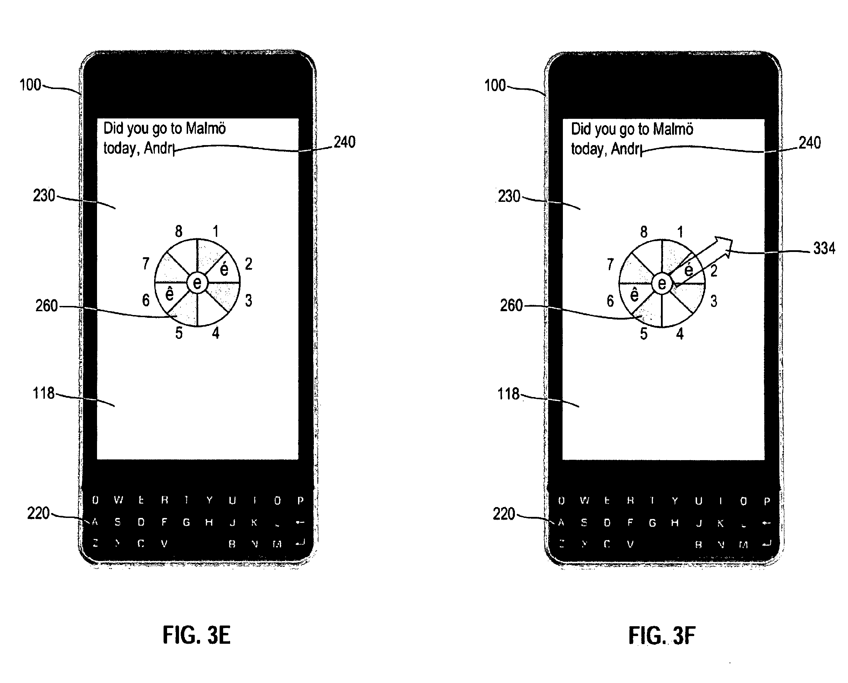

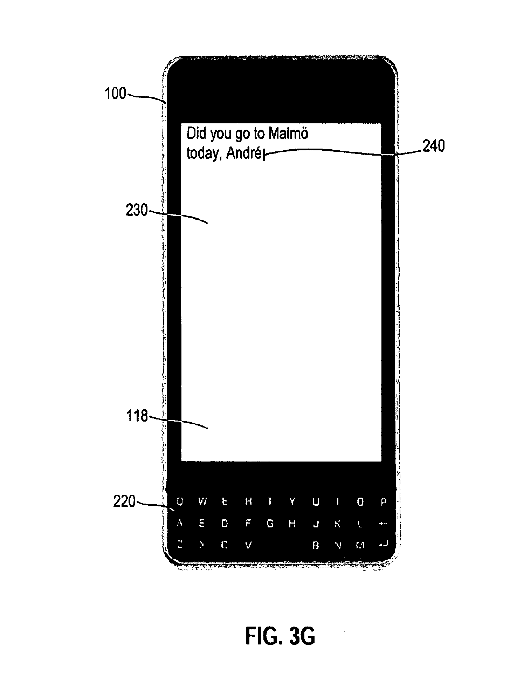

In the example shown in **Figs. 3A-3G****,** the user now wishes to enter the French character "é" to complete the entry of the name "André." **Figs. 3B-3G** depict the same entry process as described in **Figs. 2B-2G****.** In this example, the user enters the language variant character entry module via a swipe gesture 322 on the "base" character "e." *See* **Fig. 3B****.** Menu 250 then appears in **Fig. 3C****.** In this example, the user desires to input a language variant character associated with the French language character set, which here has been assigned to position 4 within menu 250. In **Fig. 3D****,** the user performs a directional swipe gesture 332 towards position 4 to select the French language character set. In **Fig. 3E****,** menu 260 appears, showing various language variant characters associated with base character "e" and associated with the French language character set. It can be seen that the desired character "é" is assigned to position 2 of menu 260. In **Fig. 3F****,** the user makes a directional swipe gesture 334 towards position 2 of menu 260, selecting the language variant character "é." Finally, in **Fig. 3G****,** the character is displayed on viewing pane 230 of touchscreen 118 to the left of cursor 240.

It can be readily recognized that the examples shown in **Figs. 2A-2G** and **Figs. 3A-3G** can be extended to select any character associated with any language, depending on the language character sets available to electronic device 100. Language character sets are made available via a device configuration process, which will now be described.

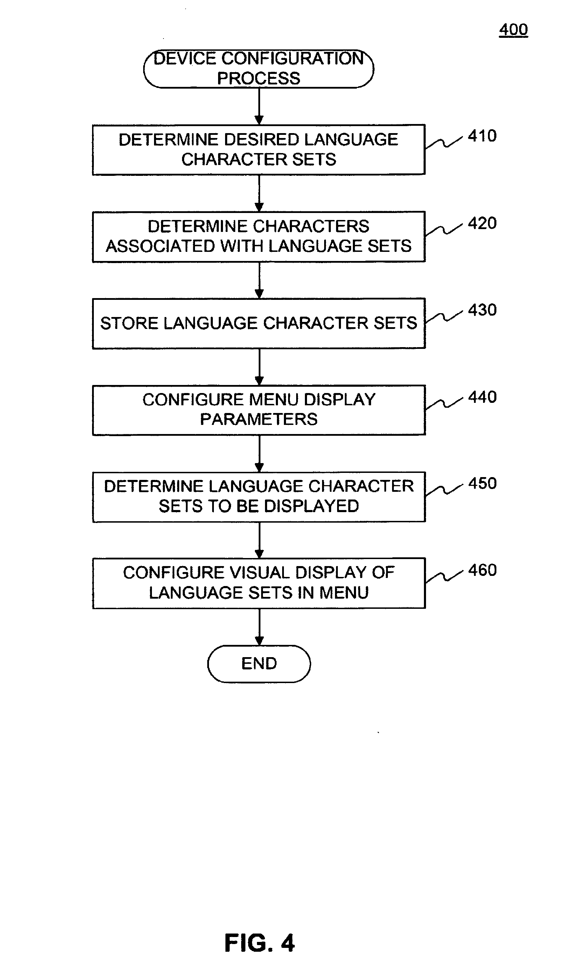

Referring to **Fig. 4**, in some example embodiments a device configuration process 400 may be performed, consistent with example embodiments disclosed herein.

In one embodiment, electronic device 100 may determine a plurality of desired words and characters associated with languages to be incorporated into memory 110 for user selection (Step 410). One or more language character sets may be available for incorporation into memory 110 depending on a number of factors, including but not limited to where the device is sold, where the device is made, and the nationality of the user. The desired language character set selection may be performed by the device manufacturer at the time of device assembly, by a user after purchase, or by an intermediate third party, such as a retailer, merchant, or service provider.

Electronic device 100 may further determine the specific characters associated with the desired language character sets (Step 420). In some embodiments, the characters associated with the desired language character sets may be pre-determined, and loaded into memory 110 via physical storage devices, such as flash memory, SD cards, portable memory, etc. In some embodiments, the characters may be loaded into memory 110 via a direct connection to a remote computer or other processor. In some embodiments, the characters may be loaded into memory 110 via network 150. In some embodiments, the user may be able to vary the characters associated with a given language, and either add to or subtract from the set of characters.

The desired language character sets, along with the associated characters, may be stored by electronic device 100 within memory 110 (Step 430). Alternatively, the language character sets may be readable by electronic device 100 over network 150. The data sets may be stored in a database located in memory 110, or alternatively, may access a remote database over network 150. In one embodiment, the data sets may be accessed and re-downloaded periodically from a central remote file server by electronic device 100. The data sets may be updated as part of firmware or software upgrades.

Electronic device 100 may configure display parameters associated with menus 250 and 260 (Step 440). These parameters may include the respective shapes of menus 250/260, where menus 250/260 are displayed on viewing pane 230 and touchscreen 118, and the size of menus 250/260. In some embodiments, the display parameters in Step 440 may include how the various languages are visually represented in menu 250, as described previously with respect to **Fig. 2****.** For example, electronic device 100 may configure the languages to be displayed as abbreviations. In other embodiments, electronic device 100 may configure the languages to be displayed as national flags. In some embodiments, various display parameters for menus 250/260 may be permanently set. In some embodiments, various display parameters for menus 250/260 may be presented to the user for user preference selection.

Electronic device 100 may determine the subset of available languages that will be displayed on menu 250 (Step 450). The subset of languages that will be made available for user selection may be determined by the manufacturer, by the user, or by a third party, such as a retailer, merchant, or service provider. The subset of languages that will be made available for user selection may be updated at a later time by the user, or may for example be dynamically updated by electronic device 100. For example, positioning system 136 may determine via network 150 that electronic device 100 is being operated in a particular country or geographical region, and the subset of languages that will be made available for user selection may change based on that determination.

Electronic device 100 may configure the contents of menus 250 and 260 (Step 460). In some embodiments, the desired languages to be made available for user selection may be assigned to specific positions on menu 250. Menu positions are persistent regardless of the selected character, taking advantage of motor learning (also referred to as muscle memory) that results from repeated use of the user interface to select among language variants for the selected character.

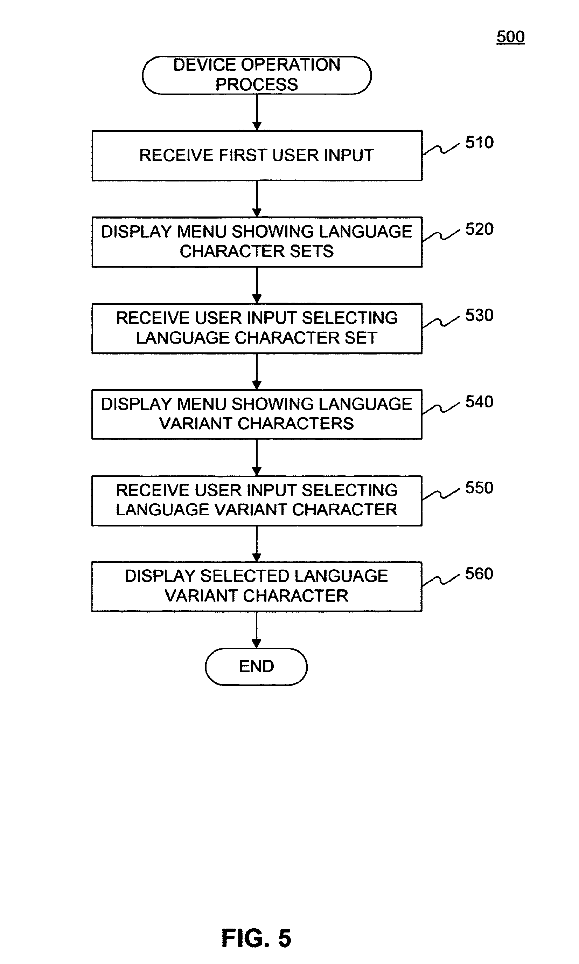

Referring to **Fig. 5****,** in some example embodiments a device operation process 500 may be performed, consistent with example embodiments disclosed herein.

Electronic device 100 may receive a first user input of a character, along with an indication that a language variant character is desired (Step 510). As described previously in association with **Figs. 2-3****,** a user may indicate a desire to enter a language variant of the character in various ways. In some embodiments, a swipe gesture may be made on keyboard 220. A skilled artisan may envision various means of indicating a desire to enter language variant characters.

Electronic device 100 may display a first menu to assist the user in selecting a desired language character set (Step 520). As an example, this menu may be menu 250. Menu 250 may be previously configured, through device configuration process 400, to display on the screen a plurality of possible language character sets for selection. The language character sets are permanently assigned to specific positions within menu 250. As previously described, visual representation of the language character sets within menu 250 may occur in a variety of ways, such as full names of languages, abbreviations of languages and/or associated countries or geographical regions, and graphic representations, such as national flags, or shapes of countries.

Electronic device 100, via keyboard 220, may receive a second input from the user indicating which language is desired for language variant character input (Step 530). In some embodiments, the input is a directional swipe, directed towards the position of the language indicia within menu 250. In some embodiments, the input is a tap, press, or hard press on a key of keyboard 220 associated with the language desired for selection.

Electronic device 100 may display a second menu to assist the user in selecting a desired language variant character (Step 540). As an example, this menu may be menu 260. Menu 260 may be previously configured, through device configuration process 400, to display on the screen a plurality of possible language variant characters associated with both the language selected in Step 530 and the "base" character selected in Step 510 for selection. The language variant character selection candidates are assigned to specific positions within menu 260.

Electronic device 100, via keyboard 220, may receive a third input from the user indicating which language variant character is desired for selection (Step 550). In some embodiments, the input is a directional swipe, directed towards the position of the language variant character indicia within menu 260. In some embodiments, the input is a tap, press, or hard press on a key of keyboard 220 associated with the language variant character desired for selection. Electronic device 100 may display the selected language variant character in viewing pane 230 of touchscreen 118 (Step 560).

## Claims

1. A method for inputting characters in a mobile communication device (100) having a display(112), a keyboard (220) and a memory (110), the method comprising:
responsive to a first input (510), receiving an input character;
associating a plurality of available language character sets in the memory with particular positions in a first menu (250), wherein the character sets are permanently assigned to the particular positions;
displaying the first menu (520) containing the plurality of available language character sets for selection;
responsive to a second input (530) reflecting a directional swipe (232, 332) toward the particular position of one of the language character sets on the first menu, displaying available language variant characters (540) associated with both the input character and the language character set associated with the directional swipe at particular positions in a second menu (260) ; and
responsive to a third input (550) reflecting a directional swipe (234, 334) toward the position of a particular one of the language variant characters on the second menu, outputting the particular language variant character (560) as a selected character.

2. The method of claim 1, wherein displaying available language variant characters comprises displaying two or more language variant characters associated with the selected character.

3. The method of any preceding claim, wherein displaying available language variant characters comprises at least one of the following:
depicting possible language character set selection candidates on the first menu by the name of the language;
depicting possible language character set selection candidates on the first menu as visual representations of national flags;
depicting possible language character set selection candidates on the first menu as abbreviated names of countries;
depicting possible language character set selection candidates on the first menu as abbreviated names of languages;
depicting possible language character set selection candidates on the first menu as visual representations of countries.

4. The method of any preceding claim, wherein each of the menus is presented visually as a circle or a polygon.

5. A mobile communication device (100) having a display (112) and a keyboard (220), comprising:
a memory (110) containing:
a plurality of character sets associated with languages, each language character set having language variant characters; and
a set of instructions; and
one or more processors (102) configured to execute the instructions to:
responsive to a first input (510) receive an input character;
associate the plurality of language character sets in the memory with particular positions in a first menu (250), wherein the character sets are permanently assigned to the particular positions;
display the first menu (520) containing the plurality of language character sets for selection;
responsive to a second input (530) reflecting a directional swipe (232, 332) toward the particular position of one of the language character sets on the first menu, display available language variant characters (540) associated with both the input character and the language character set associated with the directional swipe at particular positions in a second menu (260) ; and
responsive to a third input (550) reflecting a directional swipe (234, 334) toward the position of a particular one of the language variant characters on the second menu, output the particular language variant character (560) as a selected character.

6. The mobile communication device of claim 5, wherein displaying available language variant characters comprises displaying two or more language variant characters associated with the selected character.

7. The mobile communication device of claim 5, wherein displaying available language variants comprises at least one of:
depicting possible language character set selection candidates on the first menu by the name of the language;
depicting possible language character set selection candidates on the first menu as visual representations of national flags;
depicting possible language character set selection candidates on the first menu as abbreviated names of countries;
depicting possible language character set selection candidates on the first menu as abbreviated names of languages;
depicting possible language character set selection candidates on the first menu as visual representations of countries.

8. The mobile communication device of claim 5, wherein each of the menus is presented visually as a circle or a polygon.

## Patentansprüche

1. Ein Verfahren zum Eingeben von Zeichen in eine mobile Kommunikationsvorrichtung (100) mit einer Anzeige (112), einer Tastatur (220) und einem Speicher (110), wobei das Verfahren aufweist:
in Reaktion auf eine erste Eingabe (510), Empfangen eines Eingabezeichens;
Assoziieren einer Vielzahl von verfügbaren Sprachzeichensätzen in dem Speicher mit bestimmten Positionen in einem ersten Menü (250), wobei die Zeichensätze den bestimmten Positionen dauerhaft zugewiesen sind;
Anzeigen des ersten Menüs (520), das die Vielzahl von verfügbaren Sprachzeichensätzen zur Auswahl enthält;
in Reaktion auf eine zweite Eingabe (530), die eine direktionale Wischbewegung (232, 332) hin zu der bestimmten Position von einem der Sprachzeichensätzen auf dem ersten Menü reflektiert, Anzeigen von verfügbaren Sprachvariantenzeichen (540), die mit sowohl dem Eingabezeichen als auch dem Sprachzeichensatz assoziiert sind, assoziiert mit der direktionalen Wischbewegung an bestimmten Positionen in einem zweiten Menü (260); und
in Reaktion auf eine dritte Eingabe (550), die eine direktionale Wischbewegung (234, 334) hin zu der Position eines bestimmten der Sprachvariantenzeichen auf dem zweiten Menü reflektiert, Ausgeben des bestimmten Sprachvariantenzeichens (560) als ein ausgewähltes Zeichen.

2. Das Verfahren gemäß Anspruch 1, wobei das Anzeigen verfügbarer Sprachvariantenzeichen aufweist ein Anzeigen von zwei oder mehr Sprachvariantenzeichen, die mit dem ausgewählten Zeichen assoziiert sind.

3. Das Verfahren gemäß einem vorhergehenden Anspruch, wobei das Anzeigen von verfügbaren Sprachvariantenzeichen zumindest eines aus folgenden aufweist:
Darstellen von möglichen Sprachzeichensatz-Auswahlkandidaten auf dem ersten Menü durch den Namen der Sprache;
Darstellen von möglichen Sprachzeichensatz-Auswahlkandidaten auf dem ersten Menü als visuelle Repräsentationen von Nationalflaggen;
Darstellen von möglichen Sprachzeichensatz-Auswahlkandidaten auf dem ersten Menü als abgekürzte Namen von Ländern;
Darstellen von möglichen Sprachzeichensatz-Auswahlkandidaten auf dem ersten Menü als abgekürzte Namen von Sprachen;
Darstellen von möglichen Sprachzeichensatz-Auswahlkandidaten auf dem ersten Menü als visuelle Repräsentationen von Ländern.

4. Das Verfahren gemäß einem vorhergehenden Anspruch, wobei jedes der Menüs visuell als ein Kreis oder ein Polygon dargestellt wird.

5. Mobile Kommunikationsvorrichtung (100) mit einer Anzeige (112) und einer Tastatur (220), die aufweist:
einen Speicher (110), enthaltend:
eine Vielzahl von Zeichensätzen, die mit Sprachen assoziiert sind,
wobei jeder Sprachzeichensatz Sprachvariantenzeichen hat; und
einen Satz von Anweisungen; und
einen oder mehrere Prozessor(en) (102), der/die konfiguriert ist/sind zum Ausführen der Anweisungen zum:
in Reaktion auf eine erste Eingabe (510), Empfangen eines Eingabezeichens;
Assoziieren der Vielzahl von Sprachzeichensätzen in dem Speicher mit bestimmten Positionen in einem ersten Menü (250), wobei die Zeichensätze den bestimmten Positionen dauerhaft zugewiesen sind;
Anzeigen des ersten Menüs (520), das die Vielzahl von Sprachzeichensätzen zur Auswahl enthält;
in Reaktion auf eine zweite Eingabe (530), die eine direktionale Wischbewegung (232, 332) hin zu der bestimmten Position von einem der Sprachzeichensätzen auf dem ersten Menü reflektiert, Anzeigen von verfügbaren Sprachvariantenzeichen (540), die mit sowohl dem Eingabezeichen als auch dem Sprachzeichensatz assoziiert sind, assoziiert mit der direktionalen Wischbewegung an bestimmten Positionen in einem zweiten Menü (260); und
in Reaktion auf eine dritte Eingabe (550), die eine direktionale Wischbewegung (234, 334) hin zu der Position eines bestimmten der Sprachvariantenzeichen auf dem zweiten Menü reflektiert, Ausgeben des bestimmten Sprachvariantenzeichens (560) als ein ausgewähltes Zeichen.

6. Die mobile Kommunikationsvorrichtung gemäß Anspruch 5, wobei das Anzeigen verfügbarer Sprachvariantenzeichen ein Anzeigen von zwei oder mehr Sprachvariantenzeichen aufweist, die mit dem ausgewählten Zeichen assoziiert sind.

7. Die mobile Kommunikationsvorrichtung gemäß Anspruch 5, wobei das Anzeigen von verfügbaren Sprachvarianten zumindest eines aufweist aus:
Darstellen von möglichen Sprachzeichensatz-Auswahlkandidaten auf dem ersten Menü durch den Namen der Sprache;
Darstellen von möglichen Sprachzeichensatz-Auswahlkandidaten auf dem ersten Menü als visuelle Repräsentationen von Nationalflaggen;
Darstellen von möglichen Sprachzeichensatz-Auswahlkandidaten auf dem ersten Menü als abgekürzte Namen von Ländern;
Darstellen von möglichen Sprachzeichensatz-Auswahlkandidaten auf dem ersten Menü als abgekürzte Namen von Sprachen;
Darstellen von möglichen Sprachzeichensatz-Auswahlkandidaten auf dem ersten Menü als visuelle Repräsentationen von Ländern.

8. Die mobile Kommunikationsvorrichtung gemäß Anspruch 5, wobei jedes der Menüs visuell als ein Kreis oder ein Polygon dargestellt wird.

## Revendications

1. Procédé pour entrer des caractères dans un dispositif de communication mobile (100) comportant un écran (112), un clavier (220) et une mémoire (110), le procédé comprenant le fait :
en réponse à une première entrée (510), de recevoir un caractère d'entrée ;
d'associer une pluralité d'ensembles de caractères de langues disponibles dans la mémoire à des positions particulières dans un premier menu (250), où les ensembles de caractères sont attribués en permanence aux positions particulières ;
d'afficher un premier menu (520) contenant la pluralité d'ensembles de caractères de langues disponibles pour la sélection ;
en réponse à une deuxième entrée (530) reflétant un glissement directionnel (232, 332) vers la position particulière de l'un des ensembles de caractères de langues sur le premier menu, d'afficher des caractères de variantes de langues disponibles (540) associés à la fois au caractère d'entrée et à l'ensemble de caractères de langues associé au glissement directionnel à des positions particulières dans un deuxième menu (260) ; et
en réponse à une troisième entrée (550) reflétant un glissement directionnel (234, 334) vers la position d'un caractère particulier des caractères de variantes de langues sur le deuxième menu, de délivrer en sortie le caractère de variante de langue particulier (560) sous forme de caractère sélectionné.

2. Procédé de la revendication 1, dans lequel l'affichage des caractères de variantes de langues disponibles comprend l'affichage de deux caractères de variantes de langues ou plus associés au caractère sélectionné.

3. Procédé de l'une des revendications précédentes, dans lequel l'affichage des caractères de variantes de langues disponibles comprend au moins l'une des suivantes :
la présentation de candidats de sélection d'ensembles de caractères de langues possibles sur le premier menu par le nom de la langue ;
la présentation de candidats de sélection d'ensembles de caractères de langues possibles sur le premier menu sous forme de représentations visuelles des drapeaux nationaux ;
la présentation de candidats de sélection d'ensembles de caractères de langues possibles sur le premier menu sous forme de noms abrégés des pays ;
la présentation de candidats de sélection d'ensembles de caractères de langues possibles sur le premier menu sous forme de noms abrégés des langues ;
la présentation de candidats de sélection d'ensembles de caractères de langues possibles sur le premier menu sous forme de représentations visuelles des pays.

4. Procédé de l'une des revendications précédentes, dans lequel chacun des menus est présenté visuellement sous forme de cercle ou polygone.

5. Dispositif de communication mobile (100) ayant un écran (112) et un clavier (220), comprenant :
une mémoire (110) contenant :
une pluralité d'ensembles de caractères associés aux langues, chaque ensemble de caractères de langues ayant des caractères de variantes de langues ; et
un ensemble d'instructions ; et
un ou plusieurs processeur(s) (102) configuré(s) pour exécuter les instructions pour :
en réponse à une première entrée (510), recevoir un caractère d'entrée ;
associer la pluralité d'ensembles de caractères de langues dans la mémoire à des positions particulières dans un premier menu (250), où les ensembles de caractères sont attribués en permanence aux positions particulières ;
afficher le premier menu (520) contenant la pluralité d'ensembles de caractères de langues pour la sélection ;
en réponse à une deuxième entrée (530) reflétant un glissement directionnel (232, 332) vers la position particulière de l'un des ensembles de caractères de langues sur le premier menu, afficher les caractères de variantes de langues disponibles (540) associés à la fois au caractère d'entrée et à l'ensemble de caractères de langues associé au glissement directionnel à des positions particulières dans un deuxième menu (260) ; et
en réponse à une troisième entrée (550) reflétant un glissement directionnel (234, 334) vers la position de l'un particulier des caractères de variantes de langues sur le deuxième menu, délivrer en sortie le caractère de variante de langue particulier (560) sous forme de caractère sélectionné.

6. Dispositif de communication mobile de la revendication 5, dans lequel l'affichage de caractères de variantes de langues disponibles comprend l'affichage de deux ou plusieurs caractères de variantes de langues associés au caractère sélectionné.

7. Dispositif de communication mobile de la revendication 5, dans lequel l'affichage de variantes de langues disponibles comprend au moins l'une de :
la présentation de candidats de sélection d'ensembles de caractères de langues possibles sur le premier menu par le nom de la langue ;
la présentation de candidats de sélection d'ensembles de caractères de langues possibles sur le premier menu sous forme de représentations visuelles des drapeaux nationaux ;
la présentation de candidats de sélection d'ensembles de caractères de langues possibles sur le premier menu sous forme de noms abrégés des pays ;
la présentation de candidats de sélection d'ensembles de caractères de langues possibles sur le premier menu sous forme de noms abrégés des langues ;
la présentation de candidats de sélection d'ensembles de caractères de langues possibles sur le premier menu en tant que représentations visuelles des pays.

8. Dispositif de communication mobile de la revendication 5, dans lequel chacun des menus est présenté visuellement sous forme de cercle ou polygone.
